# EUROPEAN PATENT SPECIFICATION

(11) **EP 3 192 376 B1**
(45) Date of publication and mention of the grant of the patent: **19.02.2020**
(21) Application number: 17159398.1
(22) Date of filing: 04.12.2013
(51) Int. Cl.: A23G 9/32, A21D 13/00, A23G 3/34, A21D 13/28

(54) **ICING OR COATING COMPOSITION**
VEREISUNGS- ODER BESCHICHTUNGSZUSAMMENSETZUNG
COMPOSITION DE GLACAGE OU D'ENROBAGE

(30) Priority: 24.12.2012 US 201213726529
(43) Date of publication of application: 19.07.2017
(62) Divisional of application: 13817735.7
(73) Proprietor: Bunge Loders Croklaan B.V., 1521 AZ Wormerveer (NL)
(72) Inventor: McNeill,, Gerald Patrick, Channahon, IL 60410-5249 (US); Studenka,, Donna Cindy, Channahon, IL 60410-5249 (US); Herzing,, Anthony George, deceased (US)
(74) Representative: Potter Clarkson

(56) References cited:
- EP-A1- 1 813 155
- WO-A1-95/14392
- WO-A1-95/31110
- WO-A1-2006/133124
- WO-A1-2007/021899
- WO-A1-2008/064962
- WO-A1-2009/012888
- WO-A2-96/10338
- CA-C- 1 329 509
- US-A- 5 874 117
- US-B2- 7 645 473

## Description

This invention relates to an icing or coating composition for edible products such as baked goods including snack items such as biscuits, cookies and cakes.

A coating or icing is sometimes applied to food products such as sugar-containing baked goods. The coating or icing is often a mixture comprising fat and sugar. Chocolate-like coatings and icings typically also contain cocoa powder to give the colour and taste of chocolate.

There is a desire amongst many consumers to reduce the quantity of saturated fat in the diet. However, since saturated fat contributes to the physical and organoleptic properties of the coating or icing, replacing saturated fat can be technically challenging. This is particularly so when an icing or coating must meet other requirements such as setting relatively quickly and remaining flexible so that the icing or coating does not crack when the iced or coated product is subjected to minor mechanical shock during handling or transport.

US 7,645,473 discloses a vegetable fat composition that can be used in an icing composition for baked goods. The presence of a liquid oil is optional and in the examples 36 % liquid oil is used in the composition.

WO 2004/112492 describes a process for the production of a fat composition suitable for use as a confectionery fat, wherein a starting fat composition which contains between 20 and 95wt% of S2U, less than 75wt% of SU2+U3, less than 20wt% of S3 between 1 and 12wt% of diglycerides, between 10 and 100 wt% of at least one interesterified fat, the interesterified fat containing less than 15wt% of C-12 with respect to the total amount of interesterified fat, is subjected to a catalytic hydrogenation so as to obtain a first fat and in that the first fat is incorporated in the fat composition.

US 2008/0206413 describes a puff pastry preparation containing a fat which principally comprises palm olein, preferably interesterified.

WO 2009/012888 also relates to a laminating fat for use in dough such as puff pastry.

WO 2008/064962 discloses an ice confection having a core and a snappy outer coating layer that has a reduced saturated fatty acid content. The fat in the coating is a mixture of fractionated palm oil and a liquid oil such as canola oil, sunflower oil, soybean and corn oils.

WO 96/10338 relates to flexible ice-cream coating compositions obtained by using as fat for the fat phase a triglyceride-composition, comprising: < 8 wt.% of SSS; 25 - 80 wt.% of SUS; 2 - 40 wt.% of SU2; > 5 wt.% of U3; S = saturated fatty acid C16-C24; U = unsaturated fatty acid C18+.

WO 2007/021899 describes edible oil blends which have a desired fatty acid profile, such as a desired oleic acid content, a desired polyunsaturated fatty acid content, a desired linoleic acid content, or a desired linolenic acid content. Edible oil blends which are virtually trans free are also described.

WO 2006/133124 discloses a puff pastry fat comprised principally of palm olein, which is preferably interesterified. The puff pastry fats exhibit low levels of trans fatty acids.

WO 95/14392 describes blends of sugar and a triglyceride component, wherein the triglyceride component comprises ≥ 40 % SU2 and 3-50 % S2U while its N20 > 35 and its N30 < 10 (S = saturated fatty acid 18-24 C atoms, U = unsaturated fatty acid ≥ 18 C atoms), that are suitable for the preparation of low-SAFA filling fat compositions or low-SAFA ice-cream coatings.

EP1813155 discloses coating of ice confection with a fat blend: 60-90% lauric fat / 10-40% palm olein, characterised by the fatty acid and solid fat profile composition.

There remains a need for icing and coating compositions that have a low saturated fatty acid (SAFA) content but that can provide an organoleptically acceptable, flexible coating for edible products having an acceptable setting time, particularly for baked goods including baked confectionery snack items such as biscuits, cookies and cakes.

According to the invention, there is provided an icing or coating composition for baked confectionery products comprising at least 30 % by weight sugar and at least 20 % by weight of a fat blend, wherein the fat blend comprises from 12 to 25 % by weight SOO and from 7 to 15% SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid and wherein the fat blend has: an N10 of greater than 35 and up to 50, an N20 of greater than 20, an N25 of less than 16 and an N30 of less than 12.

Also provided by the invention is baked confectionery comprising a base product and an icing or coating, wherein the icing or coating is a composition of the invention.

A further aspect of the invention is the use of a composition of the invention as an icing or coating on a baked confectionery product.

In another aspect, the invention provides a method of making an icing or coating composition of the invention, which comprises mixing the sugar and the fat blend at a temperature of from 45 to 100 °C and refining the mixture.

In yet another aspect, the invention provides a method of forming an icing or coating on a baked confectionery product which comprises applying to the product a composition of the invention, at a temperature of from 40 to 60 °C.

In addition to providing a flexible coating for edible products, the invention involves a reduction the saturated fatty acid (SAFA) content of an icing or coating composition. Preferably, the saturated fatty acid (SAFA) content of the composition is less than 43 % by weight, such as from 35 to 40 % by weight, based on the total C12 to C24 fatty acids present. It will be appreciated that the SAFA content is based on the fatty acids that are present as fatty acyl groups in glycerides in the composition and in the fat blend it contains.

The monounsaturated fatty acid (MUFA) content of the fat blend is preferably in the range of from 42 to 50 % by weight based on the total C12 to C24 fatty acids present. The polyunsaturated fatty acid (PUFA) content of the fat blend is preferably from 10 to 20 % by weight based on the total C12 to C24 fatty acids present. Again, these are based on the fatty acids that are present as fatty acyl groups in gylcerides in the composition and in the fat blend it contains.

The fat blend comprises from 12 to 25% by weight SOO and from 7 to 15% SOL based on the total weight of triglycerides present in the blend. S is saturated fatty acid having 12 to 24 carbon atoms, O is oleic acid and L is linoleic acid. SOO refers to a tryglyceride having S at the 1- position and O at the 2- and 3- positions of the glycerol moiety. SOL refers to a triglyceride having S at the 1- position, O at the 2- position and L at the 3- position of the glycerol moiety. Those skilled in the art will understand that the numbering of the 1- and 3- positions may be exchanged.

Preferably, the fat blend comprises from 14 to 20 % by weight SOO based on the total weight of triglycerides present. Additionally or alternatively, the fat blend may comprise 8 to 14 % by weight SOL based on the total weight of triglycerides present.

The fat blend preferably comprises from 10 to 25 % by weight of a liquid oil and from 75 to 90 % by weight of a palm oil olein. More preferably, the fat blend comprises from 12 to 20 % by weight liquid oil and from 80 to 88 % by weight palm oil olein. In one preferred embodiment, the fat blend may contain only the liquid oil and the palm oil olein, in other words, the fat blend may consist of from 10 to 25 % by weight of a liquid oil and from 75 to 90 % by weight of a palm oil olein or from 12 to 20 % by weight liquid oil and from 80 to 88 % by weight palm oil olein.

Palm oil olein is obtained as a lower melting point fraction by the fractionation of palm oil. Fractionation of fats and oils into higher and lower melting fractions is a technique that is well-known to those skilled in the art. The higher melting fraction is usually termed a stearin and the lower melting fraction is usually called an olein. Fractionation may be carried out in the presence of a solvent (wet) or without a solvent (dry).

The palm oil olein is preferably interesterified. Interesterification randomises the fatty acid residues in the glycerides. Interesterification may be carried out chemically using catalysts, such as bases (e.g., sodium methoxide) or enzymatically using a lipase. Preferably, the palm oil olein is chemically interesterified.

The optionally interesterified palm oil olein preferably has an iodine value (IV) of from 45 to 65. The palm oil olein will have the same, or substantially the same, IV before interesterification. Iodine value may be determined by AOCS Cd 1d-92.

Liquid oils are vegetable oils that are liquid at room temperature (20 °C) and include canola oil, soybean oil, sunflower oil, cotton seed oil, ground nut oil, safflower oil and mixtures thereof. Preferably, the liquid oil comprises canola oil, typically in an amount of at least 75 % by weight. More, preferably, the liquid oil consists of canola oil.

The physical properties of fats are sometimes defined in terms of N values. These indicate the percentage of solid fat in the composition at a given temperature. Thus, the term Nx refers to solid fat content at a temperature of x °C, measured by NMR pulse techniques. Methods for determining N values are NEN-ISO method 8292-1 or AOCS Cd 16b-93.

The fat blend of the invention has the following N-values:
N10 of greater than 35 and up to 50, preferably from 38 to 50
N20 of greater than 20, preferably 20 to 30,
N25 of less than 16, preferably less than 15 and
N30 of less than 12, preferably less than 10.

Preferably, the fat blend comprises palmitic acid in an amount of greater than 32 % and/or stearic acid in an amount of from 3.5 to 5 %, based on the total C12 to C24 fatty acids present.

The term fatty acid, as used herein, refers to straight chain saturated or unsaturated (including mono- and poly- unsaturated) carboxylic acids having from 12 to 24 carbon atoms. The term is used herein to refer to the carboxylic acid residues bound to the glycerol moiety as acyl groups in glycerides. The fat blend preferably comprises at least 95 % by weight fatty acids, more preferably at least 98% fatty acids, based on total carboxylic acids present as acyl groups.

The fat blend used in the composition of the invention preferably comprises palmitic, stearic, oleic and linoleic acids in an amount of at least 85 % by weight, more preferably at least 90 % by weight, based on the total fatty acids present in the fat blend.

The fat blend preferably comprises linolenic acid in an amount of less than 3 % by weight, more preferably less than 2 % by weight based on total fatty acids present in the fat blend.

The fat blend used in the composition of the invention preferably contains less than 2 % by weight of arachidic and behenic acid residues based on total fatty acids present in the fat blend. More preferably, the fat blend contains less than 1 % by weight of arachidic and behenic acid residues based on total fatty acids present in the fat blend.

The fat blend preferably has at least 80 %, more preferably at least 85 %, by weight of triglycerides having carbon numbers of 50, 52 and 54. Preferably, at least 90 %, more preferably at least 95 % by weight of the triglycerides in the fat blend have carbon numbers of 48, 50, 52 and 54. It is thus preferred that less than 10 %, more preferably, less than 5 %, by weight of the triglycerides in the fat blend have a carbon number of 46 or less. Preferably, less than 9 %, more preferably less than 8 %, by weight of the triglycerides in the fat blend have a carbon number of 48. Carbon number is the total number of carbon atoms from fatty acids in a triglyceride - for example, tripalmitin (tripalmitoyl glycerol) will have a carbon number of 3 x 16 = 48.

The fat blend of the invention has typically not undergone hydrogenation. Thus, the fat blend is preferably non-hydrogenated. The fat blend is therefore substantially free of trans fatty acids i.e., it contains less than 1 %, more typically less than 0.8 %, by weight trans fatty acids based on the total fatty acids present in the fat blend.

The fat blend preferably has an iodine value (IV) of from 55 to 75. Again, iodine value may be determined by AOCS Cd 1d-92.

The icing or coating composition of the invention comprises sugar. Sugars include, for example, sucrose, glucose, fructose and mixtures thereof. The sugar is typically sucrose. The sugar is preferably powdered.

Preferably, the sugar is present in the composition of the invention in an amount of from 30 to 70 % by weight, more preferably from 40 to 60 % by weight, even more preferably from 45 to 55 % by weight, based on the weight of the composition.

The composition of the invention preferably comprises the fat blend in an amount of from 20 to 45 % by weight, such as from 30 to 35 % by weight.

The compositions of the invention optionally comprise, in addition to the fat blend and the sugar, one or more components selected from flavourants, emulsifiers and colourants. Typically, these components will be present in an amount of up to 20 % by weight of the composition. Examples of flavourants and colourants include cocoa powder, non-fat dry milk (NFDM) powder and vanillin. Lecithin is a preferred emulsifier and is preferably present in an amount of up to 1 % by weight of the composition, such as from 0.1 to 1 % by weight. It is preferred that the composition comprises cocoa powder, more preferably in an amount of up to 15 % by weight of the composition, such as from 1 to 15 % by weight.

It will be appreciated that the percentage amounts of all of the components in the composition of the invention will add up to 100 %.

The compositions are typically used to apply an icing or a partial or complete coating to a base product which is a baked confectionery product. An icing will usually be applied to the top of the base product, whereas a coating will usually be applied to all, or substantially all, of the base product. Baked products are typically baked in an oven. Examples of baked confectionery products include biscuits, cookies and cakes. Cupcakes are particularly preferred examples of baked confectionery products for the invention.

One preferred embodiment of a composition of the invention is an icing or coating composition for edible products comprising from 30 to 70 % by weight sugar and from 20 to 45 % by weight of a fat blend, wherein the fat blend wherein the fat blend comprises from 14 to 20 % by weight SOO and from 7 to 15% SOL based on the total weight of triglycerides present and the fat blend has a saturated fatty acid content of less than 43 % by weight based on the total C12 to C24 fatty acids present and a monounsaturated fatty acid content in the range of from 42 % to 50 % by weight based on the total C12 to C24 fatty acids present,and wherein S is saturated fatty acid having 12 to 24 carbon atoms, O is oleic acid and L is linoleic acid, and the fat blend has an N30 of less than 12.

Another preferred embodiment of a composition of the invention is an icing or coating composition for baked confectionery products comprising from 30 to 70 % by weight sugar, from 20 to 45 % by weight of a fat blend, from 0.1 to 1 % by weight lecithin and from 1 to 15 % by weight cocoa powder, wherein the fat blend wherein the fat blend comprises from 14 to 20 % by weight SOO and from 8 to 14 % SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid and the fat blend comprises from 10 to 25 % by weight of a liquid oil comprising canola oil and from 75 to 90 % by weight of an interesterified palm oil olein having an IV of from 45 to 65.

A further preferred embodiment of a composition of the invention is an icing or coating composition for baked confectionery products comprising from 40 to 60 % by weight sugar, from 20 to 45 % by weight of a fat blend and from 1 to 15 % by weight cocoa powder, wherein the fat blend wherein the fat blend comprises from 12 to 25 % by weight SOO and from 7 to 15% SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, and wherein S is saturated fatty acid having 12 to 24 carbon atoms, O is oleic acid and L is linoleic acid and the fat blend consists of from 10 to 25 % by weight of canola oil and from 75 to 90 % by weight of an interesterified palm oil olein.

The method of the invention for making an icing or coating composition of the invention preferably comprises mixing the sugar and the fat blend at a temperature of from 45 to 100 °C and refining the mixture. Typically, at least a portion of the fat blend is melted and added to at least the particulate ingredients (such as sugar, cocoa powder and milk powder) with stirring. The resulting mixture is then subjected to a refining step. Refining is a term that is well-known to those skilled in the art and refers to reducing the particle size of the particulates present in a composition so as to improve mouthfeel, by avoiding a gritty texture. In the refining step, the particle size of the sugar and any other particulate components is reduced. A suitable refiner is a 3-roll refiner. Any remaining non-particulate ingredients (such as emulsifier) are preferably then added together with any remaining fat. The resulting mixture is preferably mixed for around 5 minutes to 2 hours.

The method of applying an icing or coating to an edible product according to the invention comprises applying the composition of the invention to the baked confectionery product at a temperature of from 40 to 60 °C. The composition is typically applied by dipping or coating onto the edible product. Preferably, the composition is applied in a continuous process to individual items of the edible product on a conveyor, such as a conveyor belt. The coated or iced product is then cooled. A typical rate of passage of the conveyor is less than 1.1 m per minute.

It will be appreciated that the icing or coating composition of the invention should exhibit no noticeable flow at temperatures of 25 °C over a time of up to 48 hours.

The following non-limiting examples illustrate the invention and do not limit its scope in any way. In the examples and throughout this specification, all percentages, parts and ratios are by weight unless indicated otherwise.

### EXAMPLES

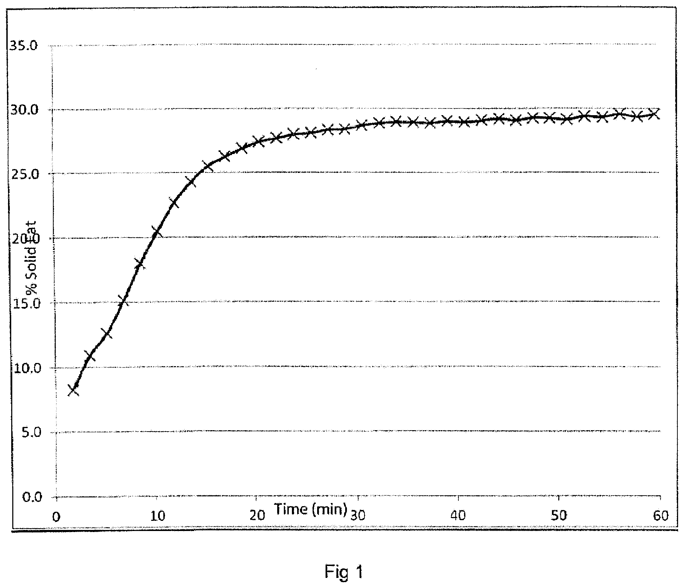

Figure 1 shows a crystallization curve for the fat blend of Example 1.

### Example 1

### Example 1A - Fat Blend

A fat blend was prepared by blending 84 % by weight of chemically interesterified palm oil olein having an iodine value (IV) of 55 (Sans Trans HF from Loders Croklaan USA LLC) with 16 % by weight canola oil.

The following analytical results were obtained for the fat blend:

| | |
|---|---|
| **IV** | 65.1 |
| **Melting point (°C)** | 38.4 |
| **N10** | 40.9 |
| **N20** | 22.4 |
| **N25** | 14.9 |
| **N30** | 9.4 |
| **N35** | 5.1 |
| **N40** | 3.3 |
| **FFA*** | 0.04 |
| **PV**** | 1.3 |
| **SAFA** | 39.4 |
| **MUFA** | 46.2 |
| **PUFA** | 13.8 |
| **TRANS** | 0.7 |

| | |
|---|---|
| * free fatty acids; ** peroxide value | |

The fatty acid composition was determined as follows:

| | | | |
|---|---|---|---|
| **C6:0** | 0.0 | **C32** | 0.0 |
| **C8:0** | 0.0 | **C34** | 0.0 |
| **C10:0** | 0.0 | **C36** | 1.4 |
| **C12:0** | 0.3 | **C38** | 1.0 |
| **C14:0** | 0.9 | **C40** | 0.0 |
| **C16:0** | 33.8 | **C42** | 0.0 |
| **C16:1** | 0.2 | **C44** | 0.0 |
| **C17:0** | 0.1 | **C46** | 1.0 |
| **C18:0** | 3.9 | **C48** | 7.8 |
| **C18:1t** | 0.0 | **C50** | 26.1 |
| **C18:1c** | 45.7 | **C52** | 35.5 |
| **C18:2t** | 0.4 | **C54** | 27.2 |
| **C18:2c** | 12.2 | **Total** | 100.0 |
| **C18:3t** | 0.3 | | |
| **C18:3c** | 1.6 | | |
| **C20:0** | 0.3 | | |
| **C20:1** | 0.3 | | |
| **C22:0** | 0.1 | | |
| **C22:1** | 0.0 | | |
| **C24:0** | 0.1 | | |
| **Total** | 100.0 | | |

A crystallization curve for the fat blend is shown in Figure 1.

The fat blend contained the following triglycerides:

| | % |
|---|---|
| SOS | 6.4 |
| SOO | 16.9 |
| OSO | 8.63 |
| SSS | 9.8 |
| SLS | 1.8 |
| SSL | 4.7 |
| SOL | 9.8 |
| OOO | 12.9 |
| 3plus* | 14.1 |
| SSO | 14.9 |

| | |
|---|---|
| * triglycerides having 3 or more double bonds | |

### Example 1B - Coating Formulation

A coating formulation was prepared from the fat blend as follows:

### Coating Formula:

| | | | |
|---|---|---|---|
| **Example 1** | | | 1200 |

| **Ingredient** | **Supplier** | **%** | **weight (g)** |
|---|---|---|---|
| Powdered Sugar | Milliana | 48.0 | 576.0 |
| Teton Cocoa powder | Blommer | 4.5 | 54.0 |
| Natural Cocoa Powder | Barry Callebaut | 4.5 | 54.0 |
| High Heat NFDM Powder | Dawn | 9.0 | 108.0 |
| Fat blend - Example 1A | | 33.5 | 402.0 |
| Lecithin | Loders Croklaan | 0.45 | 5.4 |
| E. Vanillin | Rhodia | 0.05 | 0.6 |
| **TOTAL** | | 100.0 | 1200.0 |

The coating was prepared according to the following protocol:
1.) Turn on water bath temperature on the mixer and set at 150 to 160 °F (65 to 70 °C)
2.) Weigh out the sugar, cocoa powder and milk powder together in a Hobart bowl, and then blend for 5 minutes, on 1st speed.
3.) Add approximately one half of the melted fat until the mixture just comes together, but not wet, paste-like. Turn off the mixer.
4.) Take the mixture to the refiner and run once through the 3 roll refiner.
5.) Place refined mass in a clean Hobart bowl and add the E. vanillin, lecithin, and about one half of the remaining fat to the mass.
6.) Mix on 1st speed for 3 to 5 minutes, then stop the mixer, scrape the bowl and change to 2nd speed.
7.) Mix on 2nd speed for 5 minutes or until the mixture is smooth. Stop mixer. Scrape bowl and change back to 1st speed.
8.) Add the remaining fat and mix until desired "conching" effect is achieved. Conching time is usually from 30 to 60 minutes.

### Example 2

The coating composition was applied to cupcakes in a cooling tunnel.
- The speed of the cooling tunnel was measured using a tachometer.
- The length of the cooling is 19.7 ft (6 m).
- The fastest speed of the belt is 6.6ft/min (2 m/min), or 3 minutes in the tunnel.
- The cooling tunnel has 3 temperature zones; for this experiment, all zones were set at the same temperature, 40-42F (4-6 °C).
- Fans/wind speed set at 10/8/10, respectively in zones 1, 2, and 3.
- The coating was heated to 115 °F (46.1 °C).
- Mini cupcake tops were dipped in the coating and shaken for 5 seconds and placed onto the cooling tunnel belt.

The first cupcakes were tacky, still slightly wet at the end of the tunnel with a belt speed of 4.2ft /min (1.28 m/min) or 4.6 minutes in the cooling tunnel.

The belt speed was reduced to 3.6ft /min (1.1 m/min) or 5.5 minutes in the tunnel and the cupcakes were slightly tacky.

Again, the belt speed was reduced to 3.5ft/min (1.07 m/min) or 5.6 minutes in the tunnel and coating was set, not tacky.

| | | |
|---|---|---|
| 4.2ft/min | 3.6ft/min | 3.5ft/min |
| (1.28 m/min) | (1.1 m/min) | (1.07 m/min) |
| 4.6 min | 5.5 min | 5.6 min |
| Slightly wet/ tacky | Slightly tacky | Coating set |

## Claims

1. An icing or coating composition for baked confectionery products comprising at least 30 % by weight sugar and at least 20 % by weight of a fat blend, wherein the fat blend comprises from 12 to 25 % by weight SOO and from 7 to 15% by weight SOL based on the total weight of triglycerides present and the fat blend has a saturated fatty acid content of less than 45 % by weight based on the total C12 to C24 fatty acids present and a monounsaturated fatty acid content in the range of from 40 % to 60 % by weight based on the total C12 to C24 fatty acids present, wherein S is saturated fatty acid having 12 to 24 carbon atoms, O is oleic acid and L is linoleic acid, and wherein the fat blend has: an N10 of greater than 35 and up to 50, an N20 of greater than 20, an N25 of less than 16 and an N30 of less than 12.

2. Composition as claimed in Claim 1, wherein the fat blend comprises from 14 to 20 % by weight SOO based on the total weight of triglycerides present.

3. Composition as claimed in Claim 1 or Claim 2 wherein the saturated fatty acid (SAFA) content of the composition is less than 40% by weight.

4. Composition as claimed in any one of the preceding claims wherein the fat blend comprises palmitic acid in an amount of greater than 32 % by weight and stearic acid in an amount of from 3.5 to 5 % by weight, based on the total C12 to C24 fatty acids present.

5. Composition as claimed in any one of the preceding claims wherein the sugar is present in the composition in an amount of from 30 to 70 % by weight.

6. Composition as claimed in any one of the preceding claims wherein the fat blend is present in the composition in an amount of from 20 to 45 % by weight.

7. Composition as claimed in any one of the preceding claims which further comprises cocoa powder.

8. Composition as claimed in any one of the preceding claims wherein the fat blend comprises from 10 to 25 % by weight of a liquid oil and from 75 to 90 % by weight of a palm oil olein.

9. Composition as claimed in Claim 8, wherein the palm oil olein is interesterified.

10. Composition as claimed in Claim 8 or Claim 9, wherein the palm oil olein has an iodine value (IV) of from 45 to 65.

11. Composition as claimed in any one of Claims 8 to 10 wherein the liquid oil comprises canola oil.

12. A baked confectionery product comprising a base product and an icing applied to the top of the base product or a coating applied to all, or substantially all, of the base product, wherein the icing or coating is a composition as defined in any one of Claims 1 to 11.

13. Use of a composition as defined in any one of Claims 1 to 11 as an icing or coating on a baked confectionery product.

14. Use as claimed in Claim 13 or product as claimed in Claim 12 wherein the baked confectionery product is selected from biscuits, cookies and cakes.

15. Method of making an icing or coating composition as defined in any one of Claims 1 to 11, which comprises mixing the sugar and the fat blend at a temperature of from 45 to 100 °C and refining the mixture.

16. Method of forming an icing or coating on a baked confectionery product which comprises applying to the product the composition of any one of Claims 1 to 11 at a temperature of from 40 to 60 °C.

## Patentansprüche

1. Glasur- oder Überzugszusammensetzung für gebackene Süßwarenprodukte, umfassend mindestens 30 Gew.-% Zucker und mindestens 20 Gew.-% einer Fettmischung, wobei die Fettmischung 12 bis 25 Gew.-% SOO und 7 bis 15 Gew.-% SOL umfasst, bezogen auf das Gesamtgewicht der vorhandenen Triglyceride und wobei die Fettmischung einen Gehalt an gesättigten Fettsäuren von weniger als 45 Gew.-%, bezogen auf die insgesamt vorhandenen C12- bis C24-Fettsäuren, und einen Gehalt an einfach-ungesättigten Fettsäuren im Bereich von 40 bis 60 Gew.-%, bezogen auf die insgesamt vorhandenen C12- bis C24-Fettsäuren aufweist, wobei S eine gesättigte Fettsäure mit 12 bis 24 Kohlenstoffatomen ist, O eine Ölsäure ist und L eine Linolsäure ist, und wobei die Fettmischung aufweist:
ein N10 von mehr als 35 und bis zu 50, ein N20 von mehr als 20, ein N25 von weniger als 16 und ein N30 von weniger als 12.

2. Zusammensetzung nach Anspruch 1, wobei die Fettmischung 14 bis 20 Gew.-% SOO, bezogen auf das Gesamtgewicht der vorhandenen Triglyceride, umfasst.

3. Zusammensetzung nach Anspruch 1 oder Anspruch 2, wobei der Gehalt an gesättigten Fettsäuren (SAFA) der Zusammensetzung weniger als 40 Gew.-% beträgt.

4. Zusammensetzung nach einem der vorhergehenden Ansprüche, wobei die Fettmischung Palmitinsäure in einer Menge von mehr als 32 Gew.-% und Stearinsäure in einer Menge von 3,5 bis 5 Gew.-%, bezogen auf die gesamten vorhandenen C12- bis C24-Fettsäuren, umfasst.

5. Zusammensetzung nach einem der vorhergehenden Ansprüche, wobei der Zucker in der Zusammensetzung in einer Menge von 30 bis 70 Gew.-% vorhanden ist.

6. Zusammensetzung nach einem der vorhergehenden Ansprüche, wobei die Fettmischung in der Zusammensetzung in einer Menge von 20 bis 45 Gew.-% vorhanden ist.

7. Zusammensetzung nach einem der vorhergehenden Ansprüche, welche ferner Kakaopulver enthält.

8. Zusammensetzung nach einem der vorhergehenden Ansprüche, wobei die Fettmischung 10 bis 25 Gew.-% eines flüssigen Öls und 75 bis 90 Gew.-% eines Palmöloleins umfasst.

9. Zusammensetzung nach Anspruch 8, wobei das Palmölolein umgeestert ist.

10. Zusammensetzung nach Anspruch 8 oder Anspruch 9, wobei das Palmölolein eine lodzahl (IV) von 45 bis 65 aufweist.

11. Zusammensetzung nach einem der Ansprüche 8 bis 10, wobei das flüssige Öl Canolaöl umfasst.

12. Gebackenes Süßwarenprodukt, umfassend ein Basisprodukt und eine auf die Oberseite des Basisprodukts aufgebrachte Glasur oder einen Überzug, der auf das gesamte Basisprodukt oder im Wesentlichen auf das gesamte Basisprodukt aufgebracht ist, wobei die Glasur oder der Überzug eine Zusammensetzung nach einem der Ansprüche 1 bis 11 ist.

13. Verwendung einer Zusammensetzung nach einem der Ansprüche 1 bis 11 als eine Glasur oder ein Überzug auf einem gebackenen Süßwarenprodukt.

14. Verwendung nach Anspruch 13 oder Produkt nach Anspruch 12, wobei das gebackene Süßwarenprodukt aus Plätzchen, Keksen und Kuchen ausgewählt ist.

15. Verfahren zum Herstellen einer Glasur- oder Überzugszusammensetzung nach einem der Ansprüche 1 bis 11, das das Mischen der Zucker- und der Fettmischung bei einer Temperatur von 45 bis 100 °C und das Verfeinern der Mischung umfasst.

16. Verfahren zum Bilden einer Glasur oder eines Überzugs auf einem gebackenen Süßwarenprodukt, welches das Aufbringen der Zusammensetzung auf das Produkt nach einem der Ansprüche 1 bis 11 bei einer Temperatur von 40 bis 60 °C umfasst.

## Revendications

1. Composition de glaçage ou d'enrobage pour produits de confiserie cuits au four, comprenant au moins 30 % en poids de sucre et au moins 20 % en poids d'un mélange de matières grasses, dans laquelle le mélange de matières grasses comprend de 12 à 25 % en poids de SOO et de 7 à 15 % en poids de SOL sur la base du poids total de triglycérides présents, et le mélange de matières grasses présente une teneur en acides gras saturés inférieure à 45 % en poids sur la base du total des acides gras C12 à C24 présents et une teneur en acides gras monoinsaturés dans la plage de 40 % à 60 % en poids sur la base des acides gras C12 à C24 totaux présents, dans laquelle S est un acide gras saturé ayant de 12 à 24 atomes de carbone, O est l'acide oléique et L est l'acide linoléique, et dans laquelle le mélange de matières grasses présente : un N10 supérieur à 35 et allant jusqu'à 50, un N20 supérieur à 20, un N25 inférieur à 16 et un N30 inférieur à 12.

2. Composition selon la revendication 1, dans laquelle le mélange de matières grasses comprend de 14 à 20 % en poids de SOO sur la base du poids total des triglycérides présents.

3. Composition selon la revendication 1 ou 2, dans laquelle la teneur en acides gras saturés (SAFA) de la composition est inférieure à 40 % en poids.

4. Composition selon l'une quelconque des revendications précédentes, dans laquelle le mélange de matières grasses comprend de l'acide palmitique en une quantité supérieure à 32 % en poids et de l'acide stéarique en une quantité de 3,5 à 5 % en poids, sur la base des acides gras C12 à C24 totaux présents.

5. Composition selon l'une quelconque des revendications précédentes, dans laquelle le sucre est présent dans la composition en une quantité de 30 à 70 % en poids.

6. Composition selon l'une quelconque des revendications précédentes, dans laquelle le mélange de matières grasses est présent dans la composition en une quantité de 20 à 45 % en poids.

7. Composition selon l'une quelconque des revendications précédentes, qui comprend en outre de la poudre de cacao.

8. Composition selon l'une quelconque des revendications précédentes, dans laquelle le mélange de matières grasses comprend de 10 à 25 % en poids d'une huile liquide et de 75 à 90 % en poids d'une oléine d'huile de palme.

9. Composition selon la revendication 8, dans laquelle l'oléine d'huile de palme est interestérifiée.

10. Composition selon la revendication 8 ou la revendication 9, dans laquelle l'oléine d'huile de palme présente un indice d'iode (IV) de 45 à 65.

11. Composition selon l'une quelconque des revendications 8 à 10, dans laquelle l'huile liquide comprend de l'huile de canola.

12. Produit de confiserie cuit au four comprenant un produit de base et un glaçage appliqué sur la partie supérieure du produit de base ou un enrobage appliqué à l'ensemble ou à sensiblement l'ensemble du produit de base, le glaçage ou l'enrobage étant une composition telle que définie dans l'une des revendications 1 à 11.

13. Utilisation d'une composition telle que définie dans l'une quelconque des revendications 1 à 11 en tant que glaçage ou enrobage sur un produit de confiserie cuit au four.

14. Utilisation selon la revendication 13 ou produit selon la revendication 12, dans laquelle/lequel le produit de confiserie cuit au four est sélectionné parmi les biscuits, les cookies et les gâteaux.

15. Procédé de préparation d'une composition de glaçage ou d'enrobage telle que définie dans l'une quelconque des revendications 1 à 11, qui comprend le mélange du sucre et du mélange de matières grasses à une température de 45 à 100 °C et l'affinage du mélange.

16. Procédé de formation d'un glaçage ou d'un enrobage sur un produit de confiserie cuit au four, qui comprend l'application sur le produit de la composition selon l'une quelconque des revendications 1 à 11 à une température de 40 à 60 °C.
